Europäisches Patentamt

European Patent Office

Office européen des brevets

(19)

(11) EP 0 664 500 B1

(12) **FASCICULE DE BREVET EUROPEEN**

(45) Date de publication et mention
de la délivrance du brevet:
**07.04.1999  Bulletin 1999/14**

(51) Int Cl.⁶: **G05D 16/20**, B60T 8/36

(21) Numéro de dépôt: **95400087.3**

(22) Date de dépôt: **17.01.1995**

(54) **Servovalve de régulation de pression**

Druckregelservoventil

Pressure regulating servo-valve

(84) Etats contractants désignés:
**DE FR GB IT NL SE**

(30) Priorité: **21.01.1994  FR 9400649**

(43) Date de publication de la demande:
**26.07.1995  Bulletin 1995/30**

(73) Titulaire: **L' HYDRAULIQUE CHATEAUDUN
28200 Chateaudun (FR)**

(72) Inventeur: **Grancher, Raymond
F-28800 Bonneval (FR)**

(74) Mandataire: **Robert, Jean-Pierre et al
CABINET BOETTCHER,
22, rue du Général Foy
75008 Paris (FR)**

(56) Documents cités:
**EP-A- 0 186 221          DE-A- 2 826 125
GB-A- 2 225 840          US-A- 3 286 734
US-A- 3 443 594**

Printed by Jouve, 75001 PARIS (FR)

## Description

La présente invention concerne une servovalve de régulation de pression utilisée en particulier sur les circuits de freinage des aéronefs.

Une servovalve de régulation de pression, appelée aussi servo-régulateur de pression, est un appareil qui convertit un signal d'entrée électrique, généralement sous forme de courant de pilotage, en un signal de sortie hydraulique constitué par un asservissement de pression d'un circuit d'utilisation.

Dans le domaine de l'aéronautique, l'une des applications les plus importantes des servovalves de régulation de pression est la commande en pression des circuits hydrauliques de freinage des aéronefs. On utilise en particulier des servovalves de régulation de pression à trois voies dans lesquelles un tiroir en translation relie alternativement un orifice d'utilisation à un orifice d'alimentation ou à un orifice de retour suivant que la pression sur l'orifice d'utilisation, appelée aussi pression d'utilisation, est inférieure ou supérieure à une pression souhaitée. Le déplacement du tiroir est commandé d'une part par des pressions régnant dans deux chambres de pilotage alimentées par un fluide sous pression issu d'un organe de pilotage et agissant sur le tiroir en opposition l'une de l'autre, et d'autre part par la pression d'utilisation qui alimente une chambre d'utilisation reliée à l'orifice d'utilisation. L'organe de pilotage est un amplificateur électro-hydraulique constitué d'un moteur couple électrique commandant le déplacement d'un élément mécanique mobile proportionnellement au courant de pilotage du moteur couple. Cet élément mécanique est souvent constitué par une palette située entre deux buses montées en opposition; mais il peut consister en tout autre système permettant par son déplacement de créer deux pressions relatives dont la différence est proportionnelle au courant de pilotage du moteur. Ces pressions ainsi obtenues constituent les pressions régnant dans chacune des chambres de pilotage du tiroir et sont appelées pressions de pilotage. Pour obtenir une régulation à la pression souhaitée, dite pression d'asservissement, il suffit d'agir sur le courant de pilotage du moteur couple pour régler les pressions de pilotage du tiroir dont l'effort résultant s'oppose à l'effort résultant de la pression d'utilisation. Si la pression dans la chambre d'utilisation est insuffisante, le tiroir se déplace pour relier l'orifice d'utilisation à l'orifice d'alimentation et ainsi augmenter la pression d'utilisation ; à l'inverse si la pression d'utilisation est trop élevée, le tiroir se déplace pour mettre en communication l'orifice d'utilisation avec l'orifice de retour, faisant ainsi chuter la pression d'utilisation. Le tiroir revient en position d'équilibre, c'est à dire d'isolation de l'orifice d'utilisation, dès que la pression d'utilisation atteint la pression d'asservissement.

Dans ces servovalves de régulation de pression, la pression d'utilisation est directement appliquée sur le tiroir. Celui-ci subit instantanément les variations brutales de cette pression et réagit aussitôt, procurant au système une rapidité de réponse intéressante mais pouvant induire une instabilité de l'asservissement de pression.

De plus l'éloignement de la servovalve par rapport à l'organe dont elle régule la pression impose un important volume de fluide dans les canalisations occasionnant des fréquences de résonance basses n'atteignant parfois que quelques Hertz. Dès lors, il apparaît nécessaire d'augmenter la faculté d'amortissement propre de la servovalve, tout en conservant toutefois une bonne rapidité de réponse.

L'objectif principal de l'invention est d'améliorer la stabilité de la servovalve tout en optimisant le temps de réponse.

A cet effet, l'invention a pour objet une servovalve de régulation de pression comportant un corps de distributeur muni d'un orifice d'utilisation, d'un orifice d'alimentation et d'un orifice de retour, et un tiroir monté pour coulisser à l'intérieur du corps de distributeur entre une première position isolant l'orifice d'utilisation des orifices d'alimentation et de retour, une seconde position reliant l'orifice d'utilisation à l'orifice d'alimentation et une troisième position reliant l'orifice d'utilisation à l'orifice de retour. Le tiroir délimite avec le corps de distributeur deux chambres de pilotage alimentées par un fluide de pilotage issu d'un organe de pilotage et une chambre d'utilisation reliée à l'orifice d'utilisation par un canal d'utilisation. Selon l'invention, une chambre d'amortissement est ménagée dans le corps de distributeur pour agir sur le tiroir en opposition avec la chambre d'utilisation. Elle comporte un moyen mécanique pour diminuer sa raideur hydraulique et est reliée à l'orifice d'utilisation par un canal d'amortissement comportant un orifice calibré.

Ainsi, l'introduction d'une chambre d'amortissement diminuant la raideur hydraulique du système de contre réaction de pression que constitue la chambre d'utilisation permet d'assurer une variation de pression progressive du fluide dans la chambre d'amortissement par transfert de fluide au travers de l'orifice calibré. Cette opération de transvasement entre la chambre d'utilisation et la chambre d'amortissement procure au système de contre-réaction un temps d'amortissement qui s'oppose à d'éventuelles oscillations incontrôlées du fluide et du tiroir.

De plus, l'orifice calibré permet d'augmenter l'effort de contre réaction sur le tiroir pendant un régime transitoire correspondant au déplacement de celui-ci, réduisant ainsi les temps de réponse. En effet, lorsque la pression d'utilisation varie, la pression de la chambre d'amortissement varie également dans les mêmes proportions, mais plus lentement, par transvasement de fluide entre la chambre d'utilisation et la chambre d'amortissement à travers l'orifice calibré. Comme la variation de pression dans la chambre d'amortissement est en retard sur celle de la pression d'utilisation, la pression dans la chambre d'amortissement est plus petite que la pression d'utilisation lorsque celle-ci croît, et inversement. Donc, par rapport au cas du régime établi, où la pression d'utilisation est égale à celle de la chambre d'amortissement, l'effort de contre réaction sur le tiroir se trouve augmenté.

D'autres caractéristiques et avantages de l'invention apparaîtront à la lecture de la description qui suit de modes de réalisation particuliers et non limitatifs de l'invention. Il sera fait référence aux figures en annexe parmi lesquelles :

- la figure 1 est une vue schématique en coupe d'une servovalve conventionnelle et de son organe de pilotage;
- la figure 2 est une vue schématique en coupe d'une autre servovalve conventionnelle ;
- la figure 3 est une vue analogue à la figure 1 d'un premier mode de réalisation de la servovalve selon l'invention ;
- la figure 4 est une vue analogue à la figure 2 d'un second mode de réalisation de la servovalve selon l'invention ;
- Les figures 5 à 8 illustrent des variantes de réalisation de la chambre d'amortissement et de son moyen mécanique pour diminuer sa raideur hydraulique.

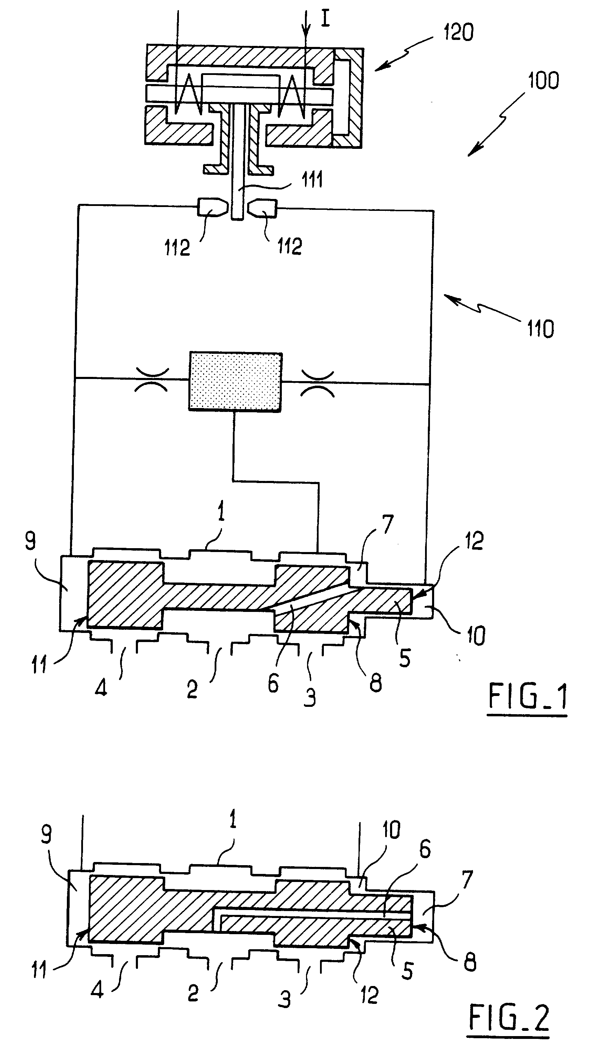

Aux figures 1 et 2, on a représenté des servovalves de régulation de pression conventionnelles constituées chacune d'un corps de distributeur 1 comportant un orifice d'utilisation 2, un orifice d'alimentation 3 et un orifice de retour 4. Un tiroir 5 est monté pour coulisser à l'intérieur du corps de distributeur 1 entre une première position isolant l'orifice d'utilisation 2 des orifices d'alimentation et de retour, une seconde position reliant l'orifice d'utilisation 2 à l'orifice d'alimentation 3 et une troisième position reliant l'orifice d'utilisation 2 à l'orifice de retour 4.

L'orifice d'utilisation 2 est relié par l'intermédiaire d'un canal d'utilisation 6 à une chambre d'utilisation 7 ménagée dans le corps de distributeur 1 en regard d' une section radiale d'utilisation 8 du tiroir 5. Deux chambres de pilotage, respectivement référencées 9 et 10 sont également ménagées dans le corps de distributeur 1 respectivement en regard de sections radiales de pilotage 11 et 12 ménagées sur le tiroir 5 et orientées en opposition l'une de l'autre.

Ces chambres de pilotage sont alimentées par un fluide sous pression issu d'un organe de pilotage 100 tel qu'un potentiomètre hydraulique 110 alimenté par un moteur-couple 120. Dans un tel système, un courant de pilotage (I) alimente le moteur couple. Celui-ci commande le déplacement d'une palette 111 du potentiomètre hydraulique située entre deux buses 112 montées en opposition et reliées par un conduit aux chambres de pilotages 9 et 10 du corps de distributeur 1. La position de la palette 111 commande la valeur relative des pressions aux bornes de chacune des buses 112, ces pressions constituant des pressions de pilotage du tiroir 5. Ainsi, à un courant de pilotage donné correspondent une valeur de la pression de pilotage dans la chambre de pilotage 9 et une valeur de la pression de pilotage dans la chambre de pilotage 10 données. Ces pressions de pilotage agissent sur le tiroir 5 en opposition l'une de l'autre et l'effort résultant exercé sur ce tiroir dépend directement du courant de pilotage du moteur couple.

Lors de la mise en service de la servovalve, l'orifice d'utilisation 2, relié à un organe extérieur tel qu'un cylindre de frein (non représenté), est soumis à une pression d'utilisation qui, par l'intermédiaire du canal d'utilisation 6 se propage dans la chambre d'utilisation 7, agissant ainsi sur le tiroir 5 en opposition de l'effort résultant des actions des pressions de pilotage.

En régime établi, le tiroir 5 est en équilibre et reste fixe en position d'isolation de l'orifice d'utilisation. Les efforts issus de la pression d'utilisation et des pressions de pilotage s'annulent et, comme les pressions de pilotage varient en fonction du courant de pilotage I, la pression d'utilisation dépend elle aussi directement du courant de pilotage. On obtient ainsi un asservissement de pression piloté par le courant de pilotage, la pression d'utilisation ainsi obtenue en régime établi étant appelée pression d'asservissement. On notera que les efforts, exercés sur le tiroir par les pressions de pilotage dépendent à la fois de la pression d'asservissement souhaitée et de la section radiale d'utilisation 8.

En régime dynamique, lorsque le courant de pilotage varie sous l'effet d'un utilisateur souhaitant obtenir une nouvelle pression d'asservissement ou que la pression d'utilisation sur l'orifice d'utilisation varie directement sous l'effet d'une variation de la charge de l'organe extérieur, les efforts exercés sur le tiroir 5 par les pressions d'utilisation et de pilotage ne s'annulent plus. Si la pression d'utilisation est supérieure à la pression d'asservissement, l'effort exercé par la pression d'utilisation sur la section radiale d'utilisation 8 du tiroir 5 est supérieur à l'effort résultant de l'action des pressions de pilotages sur les sections radiales de pilotage 11 et 12 ; le tiroir se déplace alors en position reliant l'orifice d'utilisation 2 à l'orifice de retour 4 et la pression d'utilisation diminue jusqu'à atteindre la pression d'asservissement. Le tiroir est alors repoussé en position d'isolation de l'orifice d'utilisation. Inversement, si la pression d'utilisation est inférieure à la pression d'asservissement, le tiroir 5 se déplace en position reliant l'orifice d'utilisation 2 à l'orifice d'alimentation 3 avant d'être repoussé lorsque la pression d'utilisation atteint la pression d'asservissement.

Dans ce type de servovalve conventionnelle, la pression d'utilisation est directement appliquée sur le tiroir qui réagit donc instantanément aux variations de pressions d'utilisation, ce qui est intéressant pour la rapidité de réponse, mais peut être nuisible à la stabilité de l'asservissement de pression.

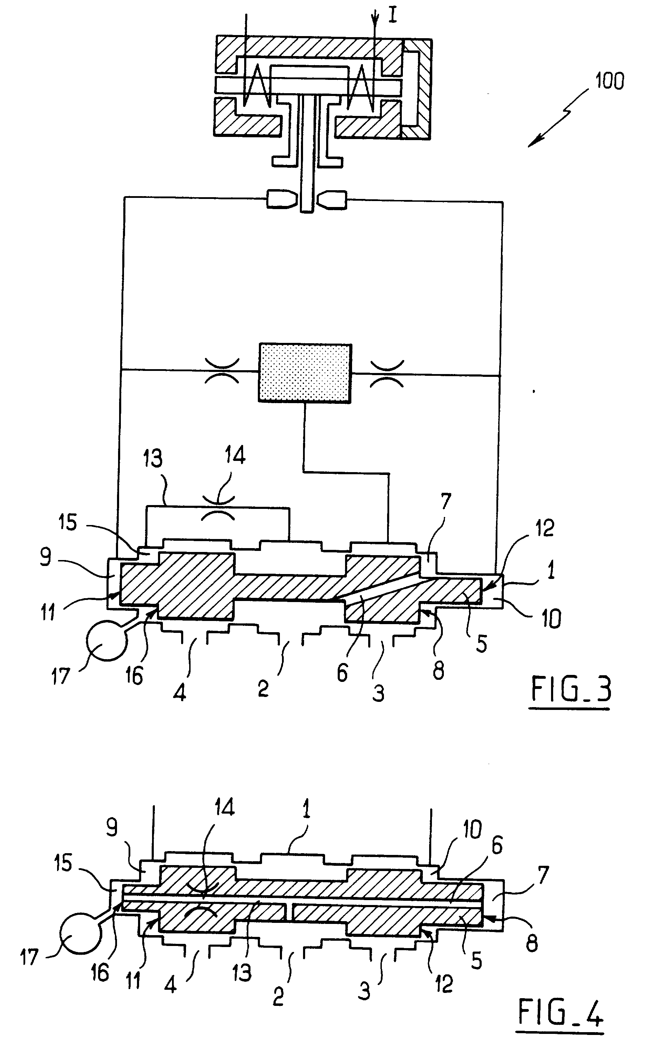

Pour remédier à cette instabilité, conformément aux figures 3 et 4, une chambre d'amortissement 15 est ménagée dans le corps de distributeur 1 en regard d'une section radiale d'amortissement 16 du tiroir 5 orientée en opposition de la section radiale d'utilisation 8. Cette chambre communique avec la chambre d'utilisation 7, par l'intermédiaire d'un canal d'amortissement 13 ménagé dans le corps de distributeur 1, comme illustré par la figure 3, ou dans le tiroir 5, comme illustré par la figure 4. Ce canal d'amortissement est muni d'un orifice calibré 14 et la chambre d'amortissement 13 est soumise à une pression dite d'amortissement.

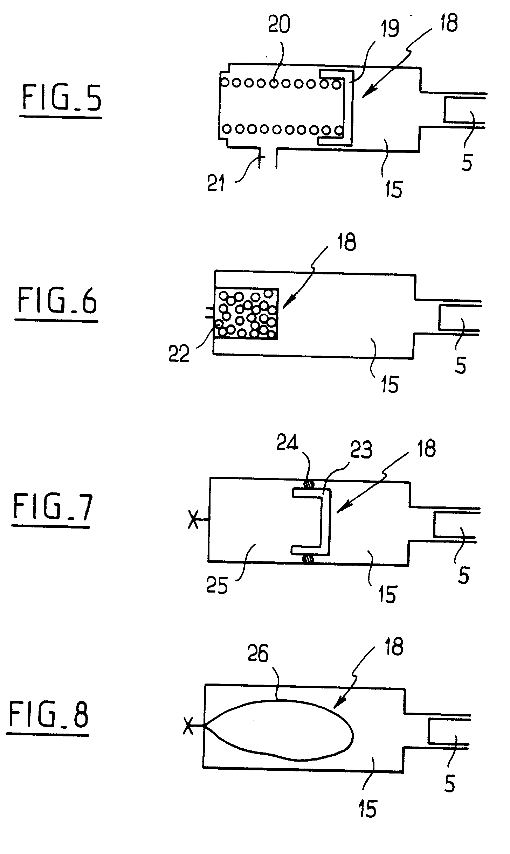

Comme illustré par les figures 5 à 8, la chambre d'amortissement 15 comporte un moyen mécanique 18 pour diminuer sa raideur hydraulique. Ce moyen mécanique 18 comporte une paroi mobile et un organe de rappel élastique de celle-ci, de telle sorte que la chambre d'amortissement 15 délimite avec cette paroi mobile un volume d'amortissement 17 variable linéairement en fonction de la pression d'amortissement. Différents modes de réalisation de ce moyen mécanique sont possibles.

Selon un premier mode de réalisation de ce moyen mécanique, illustré par la figure 5, un piston 19 accouplé à un ressort 20 coulisse dans la chambre d'amortissement 15 munie, à une extrémité éloignée du canal d'amortissement 13, d'un orifice 21.

Selon un second mode, illustré par la figure 6, un élément compressible composite 22 est disposé à l'intérieur de la chambre d'amortissement 15.

Selon un troisième mode, illustré par la figure 7, un piston 23 muni sur sa périphérie d'un joint 24 coulisse à l'intérieur de la chambre d'amortissement 15 en séparant un volume de gaz neutre sous pression 25 du volume d'amortissement 17.

Selon un quatrième mode, illustré par la figure 8, une membrane 26 contenant un volume de gaz neutre 27 sous pression est disposée à l'intérieur de la chambre d'amortissement 15.

Lors de la mise en service de la servovalve, l'orifice d'utilisation 2 est soumis à une pression d'utilisation qui, par l'intermédiaire du canal d'utilisation 6 se propage dans la chambre d'utilisation 7, agissant ainsi sur le tiroir 5 en opposition de l'effort résultant des actions des pressions de pilotage.

En régime établi, la pression dans la chambre d'amortissement est égale à la pression d'utilisation et son action sur le tiroir 5 s'oppose à celle de la pression d'utilisation. Les efforts exercés par la pression d'utilisation sur les sections radiales d'utilisation 8 et d'amortissement 16 du tiroir 5 s'opposent l'un à l'autre. La résultante de ces efforts et celle des efforts exercés par les pressions de pilotage sur les sections radiales de pilotage 11 et 12 s'annulent, de telle sorte que le tiroir 5 reste fixe, en position d'isolation de l'orifice d'utilisation 2. C'est donc ici la différence des sections radiales d'utilisation 8 et d'amortissement 16 qui doit être prise en compte pour déterminer l'effort exercé sur le tiroir 5 par la pression d'utilisation et donc les efforts exercés sur le tiroir par les pressions de pilotage en fonction de la pression d'asservissement souhaitée.

En régime dynamique, lorsqu'il y a variation de la pression d'utilisation par rapport à la pression d'asservissement parce que la charge de l'organe extérieur varie, le tiroir 5 se déplace de sa position d'équilibre, isolant l'orifice d'utilisation, pour relier l'orifice d'utilisation 2 à l'orifice d'alimentation 3 si la pression d'utilisation doit augmenter ou à l'orifice de retour 4 si la pression d'utilisation doit diminuer.

Lors de cette variation, la chambre d'utilisation 7 est immédiatement soumise à la nouvelle pression tandis que la chambre d'amortissement 15 ne voit sa pression qu'augmenter ou diminuer progressivement du fait de la variation du volume d'amortissement 17 autorisée par le moyen mécanique 18 de diminution de la raideur hydraulique de la chambre d'amortissement 15 et de la perte de charge dans l'orifice calibré 14 lors du transvasement de fluide entre la chambre d'utilisation et la chambre d'amortissement. La variation du volume d'amortissement 17 de la chambre d'amortissement 15 est autorisé grâce au déplacement de la paroi mobile du moyen mécanique 18. Le maintien en rappel de cette paroi mobile par l'organe de rappel élastique établit une dépendance directe entre une position de la paroi mobile qui correspond à un certain volume d'amortissement 17 et la pression d'amortissement.

Conformément au mode de réalisation du moyen mécanique 18 illustré par la figure 5, le piston 19 est soumis aux actions antagonistes de la pression d'amortissement et du ressort 20, l'orifice 21 permettant une variation sans augmentation de pression du volume délimité par la chambre d'amortissement 15 et la face du piston 19 opposée à celle située en regard du tiroir 5. Ainsi, l'équilibre du piston 19 impose une relation de proportionnalité entre l'allongement du ressort 20, c'est à dire la position du piston 19, et la pression d'amortissement.

Conformément au mode de réalisation de la figure 6, le volume de l'élément composite 22 varie en fonction de la pression d'amortissement. Ainsi, le volume d'amortissement, complémentaire du volume de cet élément composite, est directement lié à la pression d'amortissement.

Conformément au mode de la figure 7, le piston 23 est soumis sur une de ses faces à la pression d'amortissement, et sur son autre face à une pression exercée par le volume de gaz neutre 25, la valeur de cette pression dépendant directement du volume 25 occupé par le gaz neutre. Ce volume 25 étant complémentaire du volume d'amortissement, le volume d'amortissement est donc lui aussi dépendant de la pression d'amortissement.

Conformément à la figure 8, la membrane 26 constituant la paroi mobile du moyen mécanique 18 contient un volume de gaz neutre 27 sous pression qui varie en fonction de la pression d'amortissement exercée sur la face externe de la membrane. Ce volume étant complémentaire du volume d'amortissement, le volume d'amortissement dépend lui aussi directement de la pression d'amortissement.

Ainsi, du fait de cette variabilité du volume d'amortissement qui permet un transvasement de fluide avec perte de charge à travers l'orifice calibré 14 durant un régime transitoire pendant lequel la variation de pression de la chambre d'amortissement subit un retard sur celle de la chambre d'utilisation 7, l'action de la pression d'utilisation sur le tiroir 5, aussi appelée action de contre-réaction, face à une variation de la pression d'utilisation se trouve renforcée. En effet, l'action de contre réaction de la chambre d'utilisation, s'écrit

$$Fu = Pu\ Su - Pa\ Sa$$

où

Fu est cette action,
Pu est la pression d'utilisation,
Pa est la pression d'amortissement,
Su est la section radiale d'utilisation et
Sa est la section radiale d'amortissement.

Si l'on appelle Fuo l'action hypothétique de la pression d'utilisation sur le tiroir 5 en l'absence d'orifice calibré 14, Fuo s'écrit :

$$Fuo = Pu\ (Su - Sa)$$

car ici Pa = Pu
si l'on compare Fu à Fuo, on constate que

$$Fu - Fuo = (Pu - Pa)\ Sa$$

Si la pression d'utilisation augmente, on a :

$$Pu > Pa\ donc\ Fu < Fuo$$

avec Fuo > 0 donc IFuI > IFuoI
Si la pression d'utilisation diminue, on a :

$$Pu < Pa\ donc\ Fu < Fuo$$

avec Fuo < 0 donc IFuI > IFuoI
L'action de contre-réaction est donc renforcée par l'existence de la chambre d'amortissement 15 à volume d'amortissement 17 variable et de l'orifice calibré 14 alimentant ce volume avec perte de charge.

Un certain temps correspondant à ce régime transitoire est nécessaire pour que les pressions d'utilisation et d'amortissement s'égalisent par transvasement de fluide entre la chambre d'utilisation et la chambre d'amortissement au travers de l'orifice calibré 14.

Ce temps de latence qui correspond à une variation progressive de la pression d'amortissement permet d'éviter un retour trop rapide et brutal du tiroir vers sa position d'équilibre, réduisant ainsi les risques d'instabilité de positionnement du tiroir.

Suivant un autre cas de figure possible, correspondant à une variation de la pression d'asservissement, c'est à dire des pressions de pilotage I, sous l'effet d'une variation du courant de pilotage, le tiroir 5 se déplace et relie l'orifice d'utilisation à l'orifice d'alimentation ou à l'orifice de retour suivant que la pression d'utilisation est inférieure ou supérieure à la nouvelle pression d'asservissement. Lorsque cette liaison est établie, la pression d'utilisation dans la chambre d'utilisation et l'orifice d'utilisation varie plus rapidement que la pression d'amortissement du fait de la perte de charge au niveau de l'orifice calibré 14. De même que précédemment, un temps de latence est nécessaire pour que la pression d'amortissement varie progressivement vers la pression d'utilisation. Cette variation progressive permet ici aussi d'éviter un retour trop brutal du tiroir car, lorsque la pression d'utilisation atteint la pression d'asservissement, le tiroir tend à isoler l'orifice d'utilisation, la pression d'utilisation variant alors par transvasement de fluide entre la chambre d'utilisation et la chambre d'amortissement à travers l'orifice calibré 14 pour ramener le tiroir 5 à sa position initiale. Le retour stable du tiroir s'effectue en douceur lorsque l'égalité des pressions d'utilisation et d'amortissement est établie.

L'invention n'est pas limitée aux modes de réalisation qui viennent d'être décrits et englobe toute variante reprenant, avec des moyens équivalents, les caractéristiques énoncées plus haut.

**Revendications**

1. Servovalve de régulation de pression comportant un corps de distributeur (1) muni d'un orifice d'utilisation (2), d'un orifice d'alimentation (3) et d'un orifice de retour (4), et un tiroir (5) monté pour coulisser à l'intérieur du corps de distributeur (1), entre une première position isolant l'orifice d'utilisation (2) des orifices d'alimentation et de retour, une seconde position reliant l'orifice d'utilisation à l'orifice d'alimentation (3) et une troisième position reliant l'orifice d'utilisation à l'orifice de retour (4), le tiroir (5) délimitant avec le corps de distributeur (1) deux chambres de pilotage (9, 10) alimentées par un fluide de pilotage issu d'un organe de pilotage (100) et une chambre d'utilisation (7) reliée à l'orifice d'utilisation (2) par un canal d'utilisation (6), caractérisée en ce qu'elle comporte une chambre d'amortissement (15) ménagée dans le corps de distributeur (1) pour agir sur le tiroir (5) en opposition avec la chambre d'utilisation (7), cette chambre d'amortissement comportant un moyen mécanique (18) pour diminuer sa raideur hydraulique et étant reliée à l'orifice d'utilisation (2) via un canal d'amortissement (13) comportant un orifice calibré (14).

2. Servovalve de régulation de pression selon la revendication 1, caractérisée en ce que le canal d'amortissement (13) est ménagé dans le tiroir (5).

3. Servovalve de régulation de pression selon la revendication 1, caractérisée en ce que le canal d'amortissement (13) est ménagé dans le corps de distributeur (1).

4. Servovalve de régulation de pression selon l'une des revendications 1 à 3, caractérisée en ce que le moyen mécanique (18) comporte une paroi mobile et un moyen de rappel élastique de cette paroi mobile, la paroi mobile délimitant avec la chambre d'amortissement (15) un volume d'amortissement (17) variable.

5. Servovalve de régulation de pression selon la revendication 4, caractérisée en ce que le moyen mécanique (18) est constitué d'un piston (19) monté pour coulisser dans la chambre d'amortissement (15), d'un ressort de rappel (20) du piston vers le tiroir (5) et d'un orifice (21) ménagé dans le corps de distributeur (1) à une extrémité de la chambre d'amortissement (15) éloignée du tiroir (5).

6. Servovalve de régulation de pression selon la revendication 4, caractérisée en ce que le moyen mécanique (18) est constitué par un élément composite disposé à l'intérieur de la chambre d'amortissement (15).

7. Servovalve de régulation de pression selon la revendication 4, caractérisée en ce que le moyen mécanique (18) est constitué d'un piston (23) muni sur sa périphérie d'un joint (24) et monté pour coulisser à l'intérieur de la chambre d'amortissement (15) et d'un volume de gaz neutre sous pression contenu dans la chambre d'amortissement (15) d'un côté dudit piston opposé au tiroir (5).

8. Servovalve de régulation de pression selon la revendication 4, caractérisée en ce que le moyen mécanique (18) est constitué par une membrane (26) contenant un volume de gaz neutre sous pression et disposée à l'intérieur de la chambre d'amortissement (15).

**Patentansprüche**

1. Druckregelservoventil mit einem Ventilgehäuse (1) mit einer Verbraucheröffnung (2), einer Zuführöffnung (3) und einer Rücklauföffnung (4), und einem Schieber (5), der verschiebbar im Inneren des Ventilgehäuses (1) zwischen einer ersten die Verbraucheröffnung (2) von der Zuführ- und der Rücklauföffnung isolierenden Stellung, einer zweiten die Verbraucheröffnung mit der Zuführöffnung (3) verbindenden Stellung und einer dritten die Verbraucheröffnung mit der Rücklauföffnung (4) verbindenden Stellung gelagert ist, wobei der Schieber (5) mit dem Ventilgehäuse (1) zwei Steuerkammern (9, 10), die durch ein von einem Steuerorgan (100) abgegebenes Steuerfluid versorgt werden, und eine Verbraucherkammer (7) abgrenzt, die über einen Verbraucherkanal (6) mit der Verbraucheröffnung (2) verbunden ist, dadurch **gekennzeichnet,** daß es eine Dämpfungskammer (15) hat, die in dem Ventilgehäuse (1) ausgespart ist, um in Gegenüberstellung zur Verbraucherkammer (7) auf den Schieber (5) zu wirken, wobei die Dämpfungskammer ein mechanisches Mittel (18) hat, um ihre hydraulische Steifheit herabzusetzen, und über einen eine geeichte Öffnung (14) aufweisenden Dämpfungskanal (13) mit der Verbraucheröffnung (2) verbunden ist.

2. Druckregelservoventil nach Anspruch 1, dadurch **gekennzeichnet,** daß der Dämpfungskanal (13) im Schieber (5) ausgespart ist.

3. Druckregelservoventil nach Anspruch 1, dadurch **gekennzeichnet,** daß der Dämpfungskanal (13) im Ventilgehäuse (1) ausgespart ist.

4. Druckregelservoventil nach einem der Ansprüche 1 bis 3, dadurch **gekennzeichnet,** daß das mechanische Mittel (18) eine bewegliche Wand und ein elastisches Mittel zum Rückstellen dieser beweglichen Wand hat, wobei die bewegliche Wand mit der Dämpfungskammer (15) ein veränderliches Dämpfungsvolumen (17) abgrenzt.

5. Druckregelservoventil nach Anspruch 4, dadurch **gekennzeichnet,** daß das mechanische Mittel (18) aus einem Kolben (19), der verschiebbar in der Dämpfungskammer (15) gelagert ist, einer Feder (20) zum Zurückstellen des Kolbens in Richtung des Schiebers (5) und einer Öffnung (21) gebildet ist, die in dem Ventilgehäuse (1) an einem vom Schieber (5) entfernten Ende der Dämpfungskammer (15) ausgespart ist.

6. Druckregelservoventil nach Anspruch 4, dadurch **gekennzeichnet,** daß das mechanische Mittel (18) durch ein Mischelement gebildet ist, das im Inneren der Dämpfungskammer (15) angeordnet ist.

7. Druckregelservoventil nach Anspruch 4, dadurch **gekennzeichnet,** daß das mechanische Mittel (18) aus einem Kolben (23), der an seinem Umfang mit einer Dichtung (24) versehen und verschiebbar im Inneren der Dämpfungskammer (15) gelagert ist, und einem unter Druck stehenden Neutralgasvolumen gebildet ist, das in der Dämpfungskammer (15) auf einer dem Schieber (5) abgewandten Seite des Kolbens enthalten ist.

**8.** Druckregelservoventil nach Anspruch 4, dadurch **gekennzeichnet,** daß das mechanische Mittel (18) durch eine Membran (26) gebildet wird, die einen unter Druck stehenden Neutralgasvolumen enthält und im Inneren der Dämpfungskammer (15) angeordnet ist.

**Claims**

**1.** Pressure-regulating servovalve comprising a distributor body (1) having an output port (2), a feed port (3) and a return port (4), and a slider (5) adapted to slide inside the distributor body (1) between a first position isolating the output port (2) from the feed and return ports, a second position connecting the output port to the feed port (3) and a third position connecting the output port to the return port (4), the slider (5) co-operating with the distributor body (1) to define two pilot chambers (9, 10) fed with a pilot fluid from a pilot unit (100) and an output chamber (7) connected to the output port (2) by an output passage (6), the servovalve being characterized in that it includes a damper chamber (15) in the distributor body (1) to act on the slider (5) in opposition to the output chamber (7), this damper chamber including mechanical means (18) for reducing its hydraulic stiffness and being connected to the output port (2) via a damper passage (13) including a calibrated orifice (14).

**2.** Pressure-regulating servovalve according to claim 1 characterized in that the damper passage (13) is inside the slider (5).

**3.** Pressure-regulating servovalve according to claim 1 characterized in that the damper passage (13) is inside the distributor body (1).

**4.** Pressure-regulating servovalve according to any one of claims 1 to 3 characterized in that the mechanical means (18) includes a moving wall and return spring means for said moving wall which defines with the damper chamber (15) a variable damper volume (17).

**5.** Pressure-regulating servovalve according to claim 4 characterized in that the mechanical means (18) comprise a piston (19) adapted to slide in the damper chamber (15), a return spring (20) urging the piston towards the slider (5) and a port (21) in the distributor body (1) at the end of the damper chamber (15) remote from the slider (5).

**6.** Pressure-regulating servovalve according to claim 4 characterized in that the mechanical means (18) comprise a composite member inside the damper chamber (15).

**7.** Pressure-regulating servovalve according to claim 4 characterized in that the mechanical means (18) comprise a piston (23) having a seal (24) at its periphery and adapted to slide inside the damper chamber (15) and a pressurized neutral gas in the damper chamber (15) oil the opposite side of said piston to the slider (5).

**8.** Pressure-regulating servovalve according to claim 4 characterized in that the mechanical means (18) comprise a membrane (26) containing a volume of pressurized neutral gas inside the damper chamber (15).

FIG_1

FIG_2

FIG_3

FIG_4

FIG.5

FIG.6

FIG.7

FIG.8